Europäisches Patentamt

**European Patent Office**

**Office européen des brevets**

(19)

(11) Veröffentlichungsnummer : **0 166 101
B1**

# (12) EUROPÄISCHE PATENTSCHRIFT

(45) Veröffentlichungstag der Patentschrift :
02.03.88

(21) Anmeldenummer : 85104581.5

(22) Anmeldetag : 16.04.85

(51) Int. Cl.⁴ : **H 04 Q 11/04, H 04 M 3/36**

(54) Schaltungsanordnung für Fernmeldevermittlungsanlagen, insbesondere Fernsprechvermittlungsanlagen, mit informationsverarbeitenden Schaltwerken und Verkehrsmesseinrichtungen.

(30) Priorität : 30.04.84 DE 3416074
01.06.84 DE 3420561
01.06.84 DE 3420593

(43) Veröffentlichungstag der Anmeldung :
02.01.86 Patentblatt 86/01

(45) Bekanntmachung des Hinweises auf die Patenterteilung : 02.03.88 Patentblatt 88/09

(84) Benannte Vertragsstaaten :
AT BE CH DE FR GB IT LI NL SE

(56) Entgegenhaltungen :
EP-A- 0 096 937
EP-A- 0 104 637
DE-A- 3 311 875
DE-A- 3 328 571
FR-A- 2 402 904
US-A- 3 517 123
9th INTERNATIONAL TELETRAFFIC CONGRESS, (ITC), Oktober 1979, Torremolinos, ES; P. SOMOZA u.a.: " 'Dynamic processor overload control' and its implementation in certain single-processor and multi-processor SPC systems"
INTERNATIONAL SWITCHING SYMPOSIUM, 25.-29. Oktober 1976, Kyoto, Japan, Band 2, Seiten 433-1 - 433-1-8, I.E.C.E. of Japan, Tokyo, JP; A. TODA u.a.: "Automatic overload control of the D-10 local electronic switching system"
PATENTS ABSTRACTS OF JAPAN, Band 5, Nr. 163 (E-78)[835], 20. Oktober 1981 & JP-A-56 90 692

(73) Patentinhaber : Siemens Aktiengesellschaft Berlin und München
Wittelsbacherplatz 2
D-8000 München 2 (DE)

(72) Erfinder : Daisenberger, Georg, Dipl.-Ing.
Kärntner Platz 3
D-8000 München 21 (DE)

EP 0 166 101 B1

## Beschreibung

Die Erfindung betrifft eine Schaltungsanordnung für Fernmeldevermittlungsanlagen, insbesondere Fernsprechvermittlungsanlagen, mit Zentralen und/oder teilzentralen informationsverarbeitenden Schaltwerken mit einer hinsichtlich der Informations-Verarbeitungskapazität begrenzten Leistungsfähigkeit, und mit Verkehrsmeßeinrichtungen zur Ermittlung der Informationsverarbeitungs-Verkehrsbelastung jeweils eines Schaltwerkes und zur Erkennung von Informationsverarbeitungs-Verkehrsüberlastungen und zur Abwehr solcher Überlastungen, und mit Zählern, die einerseits durch Verarbeitungsanforderungen in Richtung auf einen Schwellenwert weitergeschaltet und andererseits mit einer Abnahme der Informationsverarbeitungs-Verkehrsbelastung wieder zurückgeschaltet werden und mit Einrichtungen, in denen mehrere solcher verschieden hohen Schwellenwerte, die verschiedenen und unterschiedlich hohen Zählerstandswerten entsprechen, unterschiedlichen Dringlichkeitsgraden verschiedener Arten von Verarbeitungsanforderungen zugeordnet sind, wodurch überdurchschnittlich dringliche Verarbeitungsanforderungen mit einem gewissen Vorrang gegenüber unterdurchschnittlich dringlichen Verarbeitungsanforderungen berücksichtigt werden und zur Abwicklung entsprechender Informationsverarbeitungs-Vorgänge führen.

Eine Schaltungsanordnung dieser Art ist bereits in der EP-A-0 121 239 (Priorität 31.3.83 ; Veröffentlicht 10.10.84) beschrieben. In diesem Falle sind die Verkehrsmeßeinrichtungen, die zur Ermittlung der Informationsverarbeitungs-Verkehrsbelastung und zur Erkennung von Informationsverarbeitungs-Verkehrsüberlastungen und zur Abwehr solcher Überlastungen dienen, Bestandteile jeweils zentraler Schaltwerke. Zu diesen gehören auch die erwähnten Zähler. Die sie in Richtung auf einen Schwellenwert weiterschaltenden Verarbeitungsanforderungen sind im Falle der EP-A-0 121 239 Initialschaltkennzeichen, die im Zusammenhang mit herzustellenden Verbindungen jeweils als erste eintreffen. Ein Initialschaltkennzeichen kündigt immer an, daß die Herstellung einer bestimmten Verbindung angefordert werden wird, und daß hierzu über jeweils die betreffende verbindungsindividuelle Schalteinrichtung eine Anzahl von weiteren Schaltkennzeichen zu erwarten ist und demnächst eintreffen wird. Diese sogen Nachfolge-Schaltkennzeichen können die Wahlkennzeichen sein, jedoch auch weitere Schaltkennzeichen im Zusammenhang mit einer Verbindungsherstellung, z. B. das Wahlendekennzeichen, das Meldekennzeichen und dergleichen. Im Falle des genannten EP-Dokuments sind nun ebenfalls Zähler der eingangs angegebenen Art vorgesehen, die durch Verarbeitungsanforderungen (und zwar durch die Initialschaltkennzeichen) in Richtung auf einen Schwellenwert weitergeschaltet und andererseits mit einer Abnahme der Informationsverarbeitungs-

verkehrsbelastung wieder zurückgeschaltet werden. Eine solche Zurückschaltung kann auf verschiedene Weise erfolgen. Es kann z. B. vorgesehen werden, daß mit jeder Erledigung eines Informationsverarbeitungsauftrages eine solche Rückschaltung erfolgt. Es kann auch vorgesehen werden, daß mit jeder Verbindungsherstellung eine solche Zurückschaltung vorgenommen wird. Im Falle der genannten EP-A-0 121 239 ist vorgesehen, daß der betreffende Zähler in gleichmäßigen Zeitabständen, also mit Hilfe von Taktimpulsen Zurückgeschaltet wird. Wie auch immer diese Zurückschaltung erfolgen mag, ist es mit einem solchen Zähler möglich, die Verkehrsbelastungs-Situation eines zentralen Schaltwerkes zu erfassen.

Ebenfalls ist es im Falle des genannten Dokuments bereits vorgesehen, für einen Zähler der angegebenen Art verschieden hohe Schwellenwerte vorzusehen, die verschiedenen und unterschiedlich hohen Zählerstandswerten entsprechen und unterschiedlichen Dringlichkeitsgraden verschiedener Arten von Verarbeitungsanforderungen zugeordnet sind. Dies sind in dem beschriebenen Falle Initialschaltkennzeichen von Teilnehmeranrufen, Initialschaltkennzeichen von ankommend belegten Verbindungsleitungen usw. Dadurch, daß für Verarbeitungsanforderungen unterschiedliche Dringlichkeitsgrade vorgesehen sind und berücksichtigt werden, können unterschiedlich dringliche Verarbeitungsanforderungen unterschiedlich berücksichtigt werden, also überdurchschnittlich dringliche Verarbeitungsanforderungen mit einem gewissen Vorrang gegenüber unterdurchschnittlich dringlichen Verarbeitungsanforderungen ; demgemäß führen diese Verarbeitungsanforderungen zur Abwicklung entsprechender Informationsverarbeitungs-Vorgänge, soweit die jeweils betreffenden Initialschaltkennzeichen angenommen werden.

Wie die erwähnte EP-A-0 121 239 ferner zeigt, gibt es außer zentralen informationsverarbeitenden Schaltwerken auch teilzentrale informationsverarbeitende Schaltwerke. Die kontinuierliche Erfassung der Belastungssituation sowie entsprechende Maßnahmen zur Abwehr von Verkehrsüberlastungen sind von besonderer Bedeutung für zentrale Schaltwerke, weil Verkehrsüberlastungen an zentraler Stelle Blockierungen mit schwerwiegenden Beeinträchtigungen des laufenden Vermittlungsbetriebes zur Folge haben können. Es ist deshalb von besonderer Bedeutung, die Belastungssituation relativ friedfertig zu erfassen und eventuellen Verkehrsüberlastungen relativ frühzeitig mit Hilfe entsprechender Gegenmaßnahmen zu begegnen. Es hat sich deshalb als zweckmäßig erwiesen, u. a. eine Erfassung der Belastungssituation an zentraler Stelle vorzunehmen und Daten über Anteile (z. B. Prozentsätze) von abzuweisenden Belegungen bzw. Initialschaltkennzeichen zu dezentralen Stellen hin zu übertragen und bereits hier, also am Ort der ursprünglichen Erfassung dieser Belegungen bzw. Initialschaltkennzeichen, geeignete Abwehrmaßnahmen zu treffen.

Für die Erfindung besteht die Aufgabe, im Blick auf die zuletzt angesprochenen Zusammenhänge eine Schaltungsanordnung anzugeben, die es ermöglicht, bei einer quantitativen Erfassung der Verarbeitungsanforderungen und einer Abweisung bestehender Quoten gemäß hierzu erarbeiteten und demgemäß übermittelten Daten zusätzlich zu dieser quantitativen Erfassung und Abweisung von Verbindungsanforderungen auch die Dringlichkeit von Belegungen mit zu berücksichtigen.

Die Erfindung löst die gestellte Aufgabe durch mit von den die Verkehrsmeßeinrichtungen dahin gehend beeinflußten Anforderungsabweiseinrichtungen, daß diese eintreffende Verarbeitungsanforderungen unabhängig von ihrer jeweiligen Dringlichkeit quantitativ teils als anzunehmend durch ein Annahmekennzeichen und teils als abzuweisend durch ein Abweisungskennzeichen zu markieren, wozu einer Anforderungsabweiseinrichtung einer der Zähler nachgeordnet ist, und mit einem diesem zugeordneten Vergleicher jedes von der Anforderungsabweiseinrichtung abgegebene Kennzeichen zusammen mit einem dem jeweiligen Dringlichkeitsgrad der betreffenden Verarbeitungsanforderung entsprechenden Dringlichkeitswert erhält und mit dem momentanen Zählerstandswert vergleicht und dann, wenn bei Vorliegen eines Abweisungskennzeichens — bzw. Annahmekennzeichens — der Dringlichkeitsgrad größer — bzw. kleiner — ist als der momentane Zählerstandswert, das Abweisungskennzeichen gegen ein Annahmekennzeichen — bzw. umgekehrt — vertauscht, wobei der Vergleicher den Zählerstandswert des Zählers um eins erhöht — bzw. erniedrigt —, wenn der Vergleicher ein Abweisungskennzeichen gegen ein Annahmekennzeichen vertauscht — bzw. ein Annahmekennzeichen gegen ein Abweisungskennzeichen vertauscht.

Die Erfindung ergänzt also eine quantitative Erfassung von Belegungen hinsichtlich eines jeweiligen mengenmäßigen Anteiles von Abweisungen und ermöglicht es, die Belegungen zusätzlich nach gegebenen Dringlichkeiten zu sortieren und dabei die Summen von akzeptierten Belegungen und die von abgewiesenen Belegungen auch innerhalb relativ kurzer Zeitspannen trotzdem unverändert zu lassen.

Eine Weiterbildung der Erfindung sieht vor, daß den in einer stetigen Folge abgestuften Dringlichkeitsgraden entsprechende Dringlichkeitswerte eine Umkehrung der Vertauschung der beiderlei Kennzeichen erst nach einer solchen Anzahl on Zählerschritten in der einen Richtung — abzüglich von eingeschobenen Zählerschritten in der anderen Richtung — bewirken, die für den Wertigkeitsunterschied bezüglich zweier aufeinander folgender Dringlichkeitsgrade festgelegt ist. Dadurch wird die Möglichkeit geschaffen, den Vorrang hinsichtlich Annahme bzw. Abweisung von Verarbeitungsanforderungen, der durch die verschiedenen Dringlichkeitsgrade angestrebt wird, in einer Schaltungsanordnung der erfindungsgemäßen Art so zu gestalten, daß der Bevorrangigungs-Effekt von Verarbeitungsanforderungen eines bestimmten Dringlichkeitsgrades gegenüber Verarbeitungsanforderungen eines nächst niedrigeren Dringlichkeitsgrades anders bemessen werden kann als bei Verarbeitungsanforderungen zweier anderer, ebenfalls aufeinander folgender Dringlichkeitsgrade.

Gemäß einer anderen Weiterbildung der Erfindung ist vorgesehen, daß dem Zähler ein Höchststandspeicher zugeordnet ist, der den im Zuge von Weiterschaltungsvorgängen und Zurückschaltungsvorgängen an dem Zähler von diesem jeweils erreichten größten Zählerstandswert speichert, und daß der Vergleicher den jeweils erhaltenen Dringlichkeitswert mit dem im Höchststandspeicher gespeicherten Zählerstandswert vergleicht, und daß dann, wenn der von dem Zähler unmittelbarerreichte Zählerstandswert einen dem untersten Dringlichkeitswert entsprechenden Wert unterscheidet, insbesondere den Wert Null erreicht, der Höchststandspeicher von seinem durch den Zähler inzwischen erreichten maximalen Zählerstandswert aus auf null zurückgeschaltet wird. Dadurch wird die Möglichkeit geschaffen, den Vorrang hinsichtlich Annahme bzw. Abweisung von Verarbeitungsanforderungen, der durch die verschiedenen Dringlichkeitsgrade angestrebt wird, in einer Schaltungsanordnung der eingangs angegebenen Art so zu gestalten, daß der Bevorrangigungs-Effekt von Verarbeitungsanforderungen der höheren Dringlichkeitsgrade gegenüber denen der mittleren unddenen der niedrigeren Dringlichkeitsgrade sich wesentlich stärker auswirkt, als der Bevorrangigungs-Effekt der Verarbeitungsanforderungen der mittleren Dringlichkeitsgrade gegenüber denen derniedrigeren Dringlichkeitsgrade. Verarbeitungsanforderungen der niedrigeren Dringlichkeitsgrade sollen also in nicht zu starkem Maße hinsichtlich der Annahme-Chance benachteiligt werden.

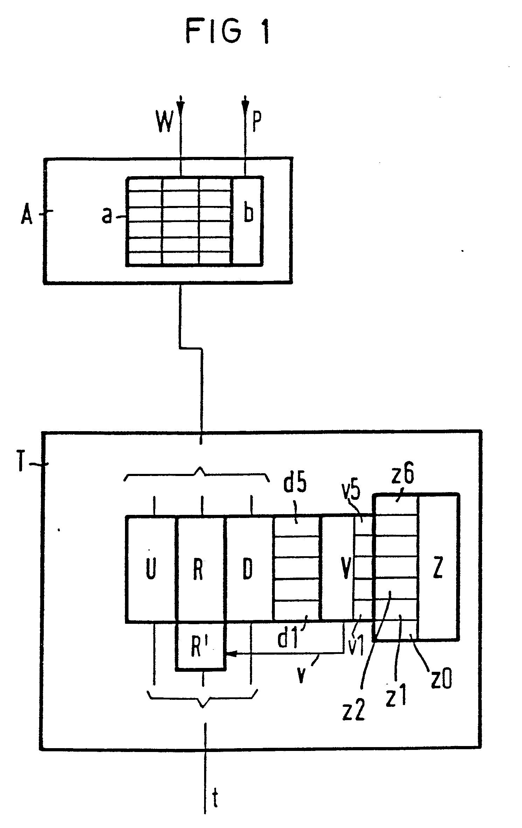

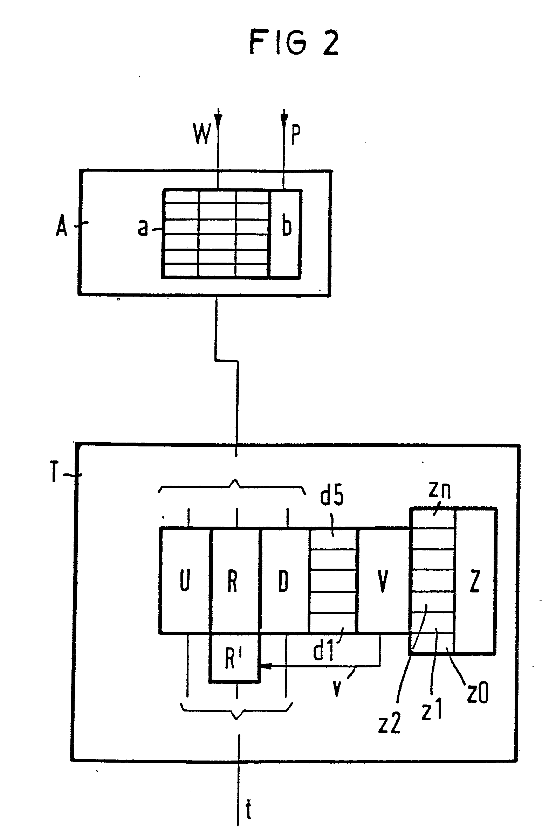

In den Figuren 1 und 2 der Zeichnung sind Ausführungsbeispiele der Erfindung nur in wesentlich zu ihrem Verständnis beitragenden Bestandteilen dargetellt. Diese Ausführungsbeispiele gehen von einer Fernsprechvermittlungsstelle aus, wie sie in der deutschen Offenlegungsschrift 3 328 571 sowie in der Zeitschrift « telcom report », 4. Jahrgang (1981), Beiheft, beschrieben ist. Die Beschreibung bezieht sich zunächst in allgemeinerer Weise auf eine Schaltungsanordnung, in der die Erfindung verwirklicht ist ; weiter unten konzentriert sich die Beschreibung auf die vorrangig erfindungsgemäßen Zusammenhänge. Die Beschreibung bezieht sich zunächst auf Figur 1.

In hier nicht im einzelner dargestellter, weil bekannter Weise ist ein zentrales Steuerwerk vorgesehen, mit dem eine Anzahl von teilzentralen Steuerwerken zusammenarbeitet. Bei diesen Steuerwerken handelt es sich also um informationsverarbeitende Schaltwerke. Diese Schaltwerke sind der zentrale Prozessor (CP) und die Gruppensteuerwerke (GP), wie sie in der genannten Zeitschrift im einzelnen beschrieben sind.

Der zentrale Prozessor liefert an die Gruppensteuerwerke laufend eine Information über einen Prozentsatz von abzuweisenden Verbindungswünschen. Der zentrale Prozessor ist mit einer Verkehrsmeßeinrichtung zur Ermittlung der Informationsverarbeitungs-Verkehrsbelastung, die auf ihn trifft, ausgestattet. Mit Hilfe dieser Verkehrsmeßeinrichtung überwacht der zentrale Prozessor nicht nur die augenblickliche Verkehrsbelastung, von der er betroffen ist ; da er unter den insgesamt von ihm zu verarbeitenden Schaltkennzeichen Initialschaltkennzeichen von anderen Schaltkennzeichen zu unterscheiden vermag, ist er in der Lage, anhand der laufend bei ihm eintreffenden Initialschaltkennzeichen zu erkennen, welche Verkehrsbelastung in den nächsten Sekunden auf ihn treffen wird. Bekanntlich sind Initialschaltkennzheichen solche Schaltkennzeichen jeweils einer herzustellenden Verbindung, die die Herstellung einer Verbindung ankündigen bzw. einleiten. Die weiteren Schaltkennzeichen enthalten dann die Informationen, die zur Verbindungsherstellung erforderlich sind. Initialschaltkennzeichen sind zum Beispiel das Anrufsignal (Aushängen), das von einer Teilnehmerstation gegeben wird, wenn dort die Leitungsschleife geschlossen wird und danach mit der Aussendung von Schleifenimpulserien begonnen wird. Ein Initialschaltkennzeichen ist zum Beispiel auch ein Belegungssignal, das in einer Leitungsabschlußschaltung einer ankommend belegbaren Leitungsabschlußschaltung aufgenommen wird. — So ist also der zentrale Prozessor in der Lage, laufend die auf ihn treffende Verkehrsbelastung zu messen und darüber hinaus sogar gleichsam « vorausschauend » zu erkennen, mit welcher Verkehrsbelastung er in den jeweils nächstfolgenden Sekunden zu rechnen hat. Der zentrale Prozessor erkennt bevorstehende Überlast-Verkehrssituationen. In solchen Fällen wird es erforderlich, daß von der Gesamtheit der eintreffenden Verbindungswünsche ein bestimmter Teil von vornherein abgewiesen wird ; denn wenn aufgrund der endlichen Leistungsfähigkeit der informationsverarbeitenden Schaltwerke (zentraler Prozessor und Gruppensteuerwerke) ein Teil der Verbindungswünsche sowieso nicht befriedigt werden kann, ist es zweckmäßig, denjenigen Teilnehmern, deren Verbindungswünsche nicht realisiert werden können, sobald wie möglich hierüber ein Signal zu geben, zum Beispiel Besetzton. Dann werden die betreffenden Teilnehmer zu frühestmöglichem Zeitpunkt davon abgehalten, weitere Mühe für die Abgabe von Wählkennzeichen zu verwenden. Darüber hinaus ist es aber auch wesentlich, bei Gefahr oder Eintreten einer Überlastsituation die betreffenden informationsverarbeitenden Schaltwerke von denjenigen Informationsverarbeitungsvorgängen zu entlasten, die sowieso nicht zu einem positiven Ergebnis führen können. — Aus den erläuterten Gründen ist deshalb vorgesehen, eine Abweisung von Verbindungswünschen bereits in der Peripherie zu realisieren. Zu diesem Zweck teilt der zentrale Prozessor bei Bevorstehen einer Überlastsituation den mit ihm zusammenarbeitenden Gruppensteuerwerken Daten über jeweils einen Prozentsatz mit, der angibt, welcher quantitative Teil der Gesamtheit auftretender Verbindungswünsche von vornherein abgewiesen werden muß, damit ein weiterer erfolgreicher Vermittlungsbetrieb für die übrigen Verbindungswünsche durchgeführt werden kann. Hierzu sind die Gruppensteuerwerke mit Anforderungsabweiseinrichtungen A ausgestattet. Ihnen wird über einen Informationsweg P von dem zentralen Prozessor der Prozentsatz von in der jeweiligen Betriebssituation abzuweisenden Verbindungswünschen mitgeteilt. Die Daten über den betreffenden Prozentsatz werden in der Anforderungsabweisevorrichtung in einer Abzähleinrichtung b gespeichert. Die Abweiseeinrichtung A enthält außerdem einen Speicher a mit einer Anzahl von Zeilen und Spalten. Jede Zeile möge zur Speicherung von Daten dienen, die jeweils zu einem Initialschaltkennzeichen gehören. Ein Initialschaltkennzeichen ist demgemäß also jeweils in einer Zeile des Speichers a gespeichert. Ferner sei angenommen, daß der Speicher a wie ein Schieberegister arbeitet. Die jeweils zu einem Initialschaltkennzeichen gehörenden Daten mögen jeweils in der obersten Zeile zunächst aufgenommen werden und dann von Zeile zu Zeile zu Zeile in Abwärtsrichtung weitergegeben werden, um schließlich von der untersten Zeile nach unten hin weitergegeben zu werden. So durchlaufen also die Initialschaltkennzeichen den Speicher a wie einen Füllschacht.

In der linken Spalte des Speichers a möge pro Zeile jeweils gespeichert werden, von welchem Ursprungsort das betreffende Initialschaltkennzeichen stammt. Dieser Ursprungsort möge durch eine Adresse einer Teilnehmeranschlußschaltung oder einer verbindungsindividuellen Schalteinrichtung (zum Beispiel ein Fernverbindungssatz, eine Leitungsabschlußschaltung einer ankommenden Verbindungsleitung oder dergleichen) bezeichnet sein. In der rechten Spalte mögen in Zuordnung zum jeweils betreffenden Initialschaltkennzeichen Daten gespeichert sein, die eine Aussage über die jeweilige Dringlichkeit enthalten, die dem betreffenden Initialschaltkennzeichen zugeordnet ist. Da jedes Initialschaltkennzeichen zu einem bestimmten Verbindungswunsch gehört, und den verschiedenen Verbindungsherstellungsaufträgen verschiedene und unterschiedliche Dringlichkeiten zugeordnet sind, unterscheiden sich die gespeicherten Initialschaltkennzeichen auch durch diese die jeweilige Dringlichkeit betreffenden Daten, die in der rechten Spalte des Speichers a pro Initialschaltkennzeichen gespeichert sind. So können zum Beispiel Teilnehmerstellen in verschiedene Dringlichkeitsklassen unterteilt sein, wobei zum Beispiel Teilnehmerstellen mit Katastrophenberechtigung eine höhere Dringlichkeit haben können als andere Teilnehmerstellen. Ferner kann vorgesehen werden, daß Verbindungsherstellungsaufträge, die von ankommend belegbaren Leitungsabschlußschaltungen von Verbindungsleitungen stammen, eine höhere Dringlichkeit haben als Verbindungsherstellungsaufträge, die von Teilnehmeranschlußschaltungen der örtlich angeschlossenen Teilnehmerstationen stammen. Es sei angenommen, daß insgesamt fünf verschiedene Dringlichkeitsstufen vorgesehen sind. Die die jeweilige dringlichkeit eines Verbindungsherstellungsauftrages betreffenden Daten mögen also aus den Ziffern 1 bis 5 bestehen.

Die Anforderungsabweiseinrichtung A enthält also unter anderem auch eine Abzähleinrichtung b, die den Prozentsatz von in der jeweiligen Betriebssituation abzuweisenden Verbindungsherstellungswünschen aufnimmt. An dieser Stelle sei bemerkt, daß dieser Prozentsatz i.d.R. gleich Null ist und nur zu Zeiten von Spitzenbelastung Werte von zum Beispiel 0 bis 20 % annimmt. In schweren Überlastsituationen kann dieser Prozentsatz auch höher liegen.

Die Abzähleinrichtung b hat die Aufgabe, dafür zu sorgen, daß von den über den Weg W eintreffenden Verbindungsherstellungsaufträgen ein solcher (quantitativer) Anteil als abzuweisend markiert wird, der dem gemeldeten Prozentsatz entspricht. Beträgt also dieser Prozentsatz zum Beispiel 5 %, so ist jeder zwanzigste Verbindungsherstellungswunsch als abzuweisend zu markieren. Dies bewerkstelligt die Abzähleinrichtung b, indem sie in der mittleren Spalte des Speichers a in Zuordnung zu dem jeweiligen Initialschaltkennzeichen ein Kennzeichen speichert, durch das das betreffende Initialschaltkennzeichen als anzunehmend oder als abzuweisend markiert wird. Demgemäß wird in Zuordnung zu dem jeweils betreffenden Initialschaltkennzeichen in der mittleren Spalte des Speichers a und in der betreffenden Zeile entweder ein Annahmekennzeichen oder ein Abweisungskennzeichen gespeichert. Die von der Verkehrsmeßeinrichtung des zentralen Prozessors beeinflußte Anforderungsabweiseeinrichtung A markiert also unabhängig von der jeweiligen Dringlichkeit, die einem Initialschaltkennzeichen beigegeben ist, die eintreffenden Verarbeitungsanforderungen, das heißt die ihnen entsprechenden Initialschaltkennzeichen quantitativ teils als anzunehmend durch ein Annahmekennzeichen und teils als abzuweisend durch ein Abweisungskennzeichen.

Der Anforderungsabweiseinrichtung A ist eine Tauscheinrichtung T nachgeordnet. Die unter anderem aus Ursprungsadresse, Dringlichkeitskennzeichen und entweder Annahmekennzeichen oder Abweisungskennzeichen bestehenden Initialschaltkennzeichen werden von der Abweiseinrichtung A sukzessive zur Tauscheinrichtung T übertragen. Diese Bestandteile eines Initialschaltkennzeichens werden in der Tauscheinrichtung T zunächst gespeichert. Ein Speicher U nimmt die Ursprungsadresse auf. Ein Speicher R nimmt das Annahmekennzeichen bzw. das Abweisungskennzeichen auf, das jeweils dem betreffenden Initialschaltkennzeichen von der Abweiseinrichtung A beigegeben worden ist. Ein Speicher D nimmt das betreffende Dringlichkeitskennzeichen auf.

Die Tauscheinrichtung T verfügt unter anderem über einen Zähler Z und über einen Vergleicher V. Der Zähler Z weist insgesamt $n+1$ Zählglieder zo bis zn auf. Immer eines dieser Zählglieder ist markiert, die anderen Zählglieder sind nicht markiert. Ist in der Tauscheinrichtung T jeweils ein Initialschaltkennzeichen eingetroffen, so nimmt der Vergleicher V einen Vergleich vor.

Jedem der mit jedem in der Tauscheinrichtung T eingetroffenen Initialschaltkennzeichen beigegebenen Dringlichkeitskennzeichen, das jeweils den Dringlichkeitsgrad eines Initialschaltkennzeichens angibt, entspricht ein Dringlichkeitswert. Die Dringlichkeitsgrade sind durch Dringlichkeitskennzeichen als ganzzahlige Zahlenwerte, oder als Buchstabenwerte zum Ausdruck gebracht, die in einer stetigen Folge geordnet sind. Die in den Dringlichkeitsgraden gegebene Abstufung ist eine stetige. Die ihnen entsprechenden Dringlichkeitskennzeichen bilden also ebenfalls eine stetige Folge. Den Dringlichkeitskennzeichen sind Dringlichkeitswerte zugeordnet, die frei wählbar für den laufenden Vermittlungsbetrieb festgelegt sind. Demgemäß sind Zuordnungen von Dringlichkeitswerten zu Dringlichkeitskennzeichen im Speicher D mit seinen Speichergliedern d1 bis d5 gespeichert.

Es sei angenommen, daß insgesamt fünf Dringlichkeitsgrade vorgesehen sind. Diese mögen durch die Zahlenwerte 1 bis 5 oder durch die Buchstabenwerte a bis e zum Speicher D hin signalisiert werden. Die in dessen Speichergliedern d1 bis d5 gespeicherten, zugeordneten Dringlichkeitswerte mögen entsprechend der Reihenfolge der Dringlichkeitsgrade zum Beispiel die Zahlenwerte 3, 4, 8, 10 und 20 aufweisen. Trifft nun zusammen mit einem Initialschaltkennzeichen im Speicher D das jenem beigegebene Dringlichkeitskennzeichen ein, so wird anhand desselben die entsprechende Zeile im Speicher D, das heißt eines seiner Speicherglieder angesteuert und der in ihm gespeicherte Dringlichkeitswert gelesen.

Wie bereits ausgeführt wurde, verfügt die Tauscheinrichtung T unter anderem über einen Zähler Z und über einen Vergleicher V. Ist in der Tauscheinrichtung T jeweils ein Initialschaltkennzeichen eingetroffen, so nimmt der Vergleicher V einen Vergleich vor. Er vergleicht den jeweils zuvor gelesenen Dringlichkeitswert mit der jeweils gegebenen Zählerstellung des Zählers Z, die in der Markierung eines der Zählglieder zo bis zn zum Ausdruck kommt. Es sei angenommen, daß die Gesamtzahl der Zählglieder des Zählers Z zwanzig betrage. Der Vergleicher V erhält also bei jedesmaligem Eintreffen eines Initialschaltkennzeichens den seinem beigegebenen Dringlichkeitskennzeichen zugeordneten Dringlichkeitswert, der in einem der Speicherglieder d1 bis d5 gespeichert ist, sowie den Zählerstandswert, den der Zähler Z in der augenblicklichen Betriebssituation erreicht hat. Immer dann, wenn der jeweilige Dringlichkeitswert größer ist als der jeweils erreichte Zählerstandswert, und wenn dem betreffenden Initialschaltkennzeichen ein Abweisungskennzeichen beigegeben ist, vertauscht die Tauscheinrichtung T dieses Abweisungskennzeichen gegen ein Annahmekennzeichen. Immer dann, wenn der jeweils erreichte Zählerstandswert größer ist als der einem Initialschaltkennzeichen entsprechende Dringlichkeitswert, und wenn dem betreffenden Initialschaltkennzeichen ein Annahmekennzeichen beigegeben ist, vertauscht die Tauscheinrichtung T dieses Annahmekennzeichen gegen ein Abweisungskennzeichen. Immer dann, wenn der Vergleicher V die Vertauschung eines Abweisungskennzeichens gegen ein Annahmekennzeichen veranlaßt, wird zugleich der Zählerstandswert des Zählers um eins erhöht. Umgekehrt wird der Zählerstandswert um eins erniedrigt, wenn auf Veranlassung des Vergleichers ein Annahmekennzeichen gegen ein Abweisungskennzeichen vertauscht wird. Der Vergleicher V bewerkstelligt diese Vertauschung jeweils über den Weg v.

Die Tauscheinrichtung T gibt nach Durchführung der beschriebenen Maßnahmen das betreffende Initialschaltkennzeichen bzw. die betreffenden Bestandteile desselben über den Weg t zwecks weiterer Verarbeitung an entsprechende Verarbeitungseinrichtungen und Steuereinrichtungen weiter, die in an sich bekannter und deshalb hier nicht im einzelnen beschriebener Weise die erforderlichen Steuerfunktionen zur Herstellung der jeweils gewünschten Verbindung ausführen.

Ist einem in der Tauscheinrichtung T eingetroffenen Initialschaltkennzeichen ein Annahmekennzeichen beigefügt, und ist der dem beigegebenen Dringlichkeitskennzeichen entsprechende Dringlichkeitswert höher als der zur Zeit erreichte Zählerstandswert des Zählers Z, so bleibt das dem Initialschaltkennzeichen beigefügte Annahmekennzeichen unverändert und auch der Zählerstandswert des Zählers bleibt unverändert. Ist einem in der Tauscheinrichtung T eingetroffenen Initialschaltkennzeichen ein Abweisungskennzeichen beigefügt, und ist der Zählerstandswert des Zählers Z höher als der dem beigegebenen Dringlichkeitskennzeichen zugeordnete Dringlichkeitswert, so bleibt das Abweisungskennzeichen unverändert dem Initialschaltkennzeichen beigegeben und auch der Zählerstandswert des Zählers Z wird nicht verändert.

Mit Hilfe der Tauscheinrichtung T ist es möglich, bei Verbindungsherstellungsaufträgen, von denen bereits in der Peripherie ein bestimmter Prozentsatz abgewiesen werden muß, zusätzlich die Dringlichkeit jedes der Verbindungsherstellungsaufträge mit zu berücksichtigen, ohne daß dadurch der genannte Prozentsatz verändert wird. Die Grenze bezüglich des jeweiligen Dringlichkeitsgrades ist dabei jedoch gleitend. Dies bedeutet, daß bei einem Eintreffen von relativ vielen Initialschaltkennzeichen mit hohen Dringlichkeitsgraden die Dringlichkeitsgrenze höher ist, als wenn überwiegend Initialschaltkennzeichen mit relativ niedrigen Dringlichkeitsgraden eintreffen. In letzterem Falle kann also die in der betreffenden Betriebssituation eingeschränkte Verkehrsbelastbarkeit von Verbindungsherstellungsaufträgen ausgenutzt werden, die einen relativ niedrigen Dringlichkeitsgrad aufweisen. Dies ermöglicht es, bei der Abweisung von Verbindungsherstellungsaufträgen trotz gegebener fester Prozentsätze (« fest », weil sie den betreffenden Abweiseinrichtungen vom zentralen Prozessor diktiert werden) dennoch auch die unterschiedlichen Dringlichkeiten dieser Aufträge mit zu berücksichtigen, doch aber so, daß die jeweils einem Gruppensteuerwerk vom zentralen Prozessor angebotene Verarbeitungskapazität voll ausgeschöpft werden kann. Obwohl der jeweilige Dringlichkeitsgrad eines Verbindungsherstellungsauftrages immer mit gewertet wird bei der jeweiligen Entscheidung über Annahme oder Abweisung, ist die dafür bestehende Grenze bzw. der betreffende Schwellenwert nicht starr festgelegt, sondern je nach Aufkommen von Verbindungsherstellungsaufträgen und je nach den dabei vorkommenden unterschiedlichen Dringlichkeitsgraden können auch weniger dringliche Verbindungsherstellungsaufträge in Zeiträumen bearbeitet werden, in denen entsprechend weniger dringliche Verbindungsherstellungsaufträge eintreffen. Treffen dagegen in anderen Zeiträumen überwiegend Verbindungsherstellungsaufträge mit höheren Dringlichkeitsgraden ein, so werden diese gegenüber den Verbindungsherstellungsaufträgen mit niedrigeren Dringlichkeitsgraden bevorzugt.

Den in einer stetigen Folge abgestuften Dringlichkeitsgraden sind also Dringlichkeitswerte zugeordnet, für die weiter oben als Beispiel die Zahlenwerte 3, 4, 8, 10 und 20 angegeben sind. Wie hieraus ersichtlich ist, bestehen für die verschiedenen Wertigkeitsunterschiede zwischen den jeweils zwei aufeinanderfolgenden Dringlichkeitsgraden zugeordneten Dringlichkeitswerten verschiedene Differenzbeträge. Gemäß diesen beispielsweisen Dringlichkeitswerten beträgt der Wertigkeitsunterschied für die beiden untersten Dringlichkeitsgrade eins, für die nächsten beiden Dringlichkeitsgrade vier, für die nächsten beiden Dringlichkeitsgrade zwei und für die letzten beiden Dringlichkeitsgrade 10. Diese Wertigkeitsunterschiede bestimmen nun den jeweiligen Bevorrangigungs-Effekt. Hat der Zähler Z zum Beispiel den Zählerstandwert 6 erreicht, und treffen weiterhin Verbindungsherstellungsaufträge (mit Initialschaltkennzeichen) mit dem Dringlichkeitskennzeichen 3 und einem Abweisungskennzeichen ein, so wird bei noch zwei solchen Verbindungsherstellungsaufträgen das Abweisungskennzeichen gegen ein Annahmekennzeichen vertauscht. Hat der Zähler Z dagegen den Zählerstandwert 9 erreicht und treffen weiterhin Verbindungsherstellungsaufträge mit dem Dringlichkeitskennzeichen 4 und einem Abweisungskennzeichen ein, so wird bei noch einem solchen Verbindungsherstellungsauftrag das Abweisungskennzeichen gegen ein Annahmekennzeichen vertauscht. Hat der Zähler Z aber den Zählerstandswert 11 erreicht, und treffen weiterhin Verbindungsherstellungsaufträge mit dem Dringlichkeitskennzeichen 5 und einem Abweisungskennzeichen ein, so wird bei noch neun weiteren solchen Verbindungsherstellungsaufträgen das Abweisungskennzeichen gegen ein Annahmekennzeichen vertauscht.

Die den Dringlichkeitsgraden entsprechenden Dringlichkeitswerte bewirken also eine Umkehrung der Vertauschung der beiderlei Kennzeichen (Annahmekennzeichen/Abweisungskennzeichen) erst nach einer solchen Anzahl von Zählerschritten in der einen Richtung — abzüglich von eingeschobenen Zählerschritten in der anderen Richtung —, die für den Wertigkeitsunterschied bezüglich zweier jeweils aufeinanderfolgender Dringlichkeitsgrade festgelegt ist. Aus dem gegebenen Zahlenbeispiel für die Dringlichkeitswerte ergibt sich, daß bei diesem Beispiel Verbindungsherstellungsaufträge mit dem Dringlichkeitsgrad 2 nur einen relativ geringen Vorrang (Bevorrangigungs-Effekt) haben als Verbindungsherstellungsaufträge mit dem Dringlichkeitsgrad 3 gegenüber Verbindungsherstellungsaufträgen mit dem Dringlichkeitsgrad 2. Der Vorrang, den Verbindungsherstellungsaufträge mit dem Dringlichkeitsgrad 4 gegenüber Verbindungsherstellungsaufträgen mit dem Dringlichkeitsgrad 3 haben, ist wieder geringer. Jedoch ist der Vorrang, den Verbindungsherstellungsaufträge mit dem Dringlichkeitsgrad 5 gegenüber Verbindungsherstellungsaufträgen mit dem Dringlichkeitsgrad 4 haben, sehr groß. Das Ausmaß dieser gegenseitigen Bevorzugungen ist durch Festlegung von Dringlichkeitswerten in Zuordnung zu den Dringlichkeitsgraden beliebig bestimmbar.

Unter Hinweis auf die in der vorstehenden Beschreibung verwendete Bezeichnung « zentraler Prozessor » sei ergänzend hinzugefügt, daß es sich hierbei keineswegs um ein zentrales Steuerwerk handeln muß, in dem alle Informationen verarbeitet werden, die irgend anfallen, und das sämtliche für die Vermittlungsvorgänge zu erarbeitenden Steuerbefehle aufgrund einer allumfassenden Datenverarbeitung liefert, sondern vorzugsweise ist vorgesehen, daß die Gruppensteuerwerke die Hauptlast dieser Datenverarbeitung tragen. Die Funktion des « zentralen Prozessors » kann dabei durchaus darauf beschränkt sein, daß er nur koordiniert, daß er also bei solchen Prozessen, die von mehr als nur einem Gruppensteuerwerk gesteuert werden, dafür sorgt, daß die verschiedenen Teil-Prozesse im erforderlichen Zusammenhang zur Durchführung gebracht werden.

Nachdem die Beschreibung bisher anhand von Figur 1 das erfindungsgemäße und gemäß der bereits erwähnten ersten Weiterbildung der Erfindung ausgestaltete Ausführungsbeispiel erläutert hat, nimmt sie anschließend anhand von Figur 2 auf ein gemäß der genannten zweiten Weiterbildung ausgestattetes erfindungsgemäßes weitgehend ähnliches Ausführungsbeispiel bezug. Soweit die Darstellung nach Figur 2 mit der gemäß Figur 1 übereinstimmt, gelten die vorstehenden Erläuterungen hierzu auch für das Ausführungsbeispiel gemäß Figur 2.

Wie bereits ausgeführt wurde, verfügt die Tauscheinrichtung T unter anderem über einen Zähler Z und über einen Vergleicher V. Dem Zähler Z ist ein Höchststandspeicher v1 bis v5 zugeordnet. Dieser speichert jeweils den im Zuge von Weiterschaltungsvorgängen und Zurückschaltungsvorgängen an dem Zähler von diesem jeweils erreichten größten Zählerstandswert.

Ist in der Tauscheinrichtung T jeweils ein Initialschaltkennzeichen eingetroffen, so nimmt der Vergleicher V einen Vergleich vor. Er vergleicht den jeweils zuvor aus dem Speicher D gelesenen Dringlichkeitswert mit dem zu diesem Zeitpunkt im Höchststandspeicher v1 bis v5 gespeicherten Zählerstandswert. Der Vergleicher V erhält also bei jedesmaligem Eintreffen eines Initialschaltkennzeichens den seinem beigegebenen Dringlichkeitskennzeichen zugeordneten Dringlichkeitswert, der in einem der Speicherglieder d1 bis d5 gespeichert ist, sowie den im Höchststandspeicher augenblicklich gespeicherten Zählerstandswert. Immer dann, wenn der jeweilige Dringlichkeitswert größer ist als der jeweils im Höchststandspeicher gespeicherte Zählerstandswert, und wenn dem betreffenden Initialkennzeichen ein Abweisungskennzeichen beigegeben ist, vertauscht die Tauscheinrichtung T dieses Abweisungskennzeichen gegen ein Annahmekennzeichen. Immer dann, wenn der jeweils erreichte höchste Zählerstandswert, der im Höchststandspeicher gespeichert ist, größer ist als der einem Initialschaltkennzeichen entsprechende Dringlichkeitswert, und wenn dem betreffenden Initialschaltkennzeichen ein Annahmekennzeichen beigegeben ist, vertauscht die Tauscheinrichtung T dieses Annahmekennzeichen gegen ein Abweisungskennzeichen. Immer dann, wenn der Vergleicher die Vertauschung eines Abweisungskennzeichens gegen ein Annahmekennzeichen veranlaßt, wird zugleich der Zählerstandswert des Zählers um eins erhöht. Umgekehrt wird der Zählerstandswert um eins erniedrigt, wenn auf Veranlassung des Vergleichers ein Annahmekennzeichen gegen ein Abweisungskennzeichen vertauscht wird. Der Vergleicher V bewerkstelligt diese Vertauschung jeweils über den Weg v. — Ferner wird immer dann, wenn der von dem Zähler unmittelbar erreichte Zählerstandswert einen dem untersten Dringlichkeitswert entsprechenden Wert unterschreitet, insbesondere den Wert Null erreicht, der Höchststandspeicher von seinem durch den Zähler inzwischen erreichten maximalen Zählerstandswert aus auf null zurückgeschaltet.

Die Tauscheinrichtung T gibt nach Durchführung der beschriebenen Maßnahmen das betreffende Initialschaltkennzeichen bzw. die betreffenden Bestandteile desselben in der bereits beschriebenen Weise weiter.

Ist einem in der Tauscheinrichtung T eingetroffenen Initialschaltkennzeichen ein Annahmekennzeichen oder ein Abweisungskennzeichen beigefügt, so wird gemäß Zählerstandswert und Dringlichkeitskennzeichen das betreffende Annahmekennzeichen bzw. Abweisungskennzeichen in der bereits beschriebenen Weise dem Initialschalt-

kennzeichen beigegeben. Auch mit Hilfe der in Figur 2 gezeigten Tauscheinrichtung T kann bei Verbindungsherstellungsaufträgen, von denen bereits in der Peripherie ein bestimmter Prozentsatz abgewiesen werden muß, in der bereits beschriebenen Weise zusätzlich die Dringlichkeit jedes der Verbindungsherstellungsaufträge mit berücksichtigt werden, ohne daß dadurch der genannte Prozentsatz verändert wird. Die in diesem Zusammenhang oben zu Figur 1 gegebenen Erläuterungen gelten auch für das Ausführungsbeispiel nach Figur 2. Ferner ist auch das bei der Beschreibung von Figur 1 gegebene und die in einer stetigen Folge abgestuften Dringlichkeitsgrade und diesen zugeordneten Dringlichkeitswerte betreffende Zahlenbeispiel auf das Ausführungsbeispiel nach Figur 2 anzuwenden, ferner das sich hieran anschließende Funktionsbeispiel, das unter den angegebenen Voraussetzungen zur Vertauschung der beschriebenen Kennzeichen führt.

Die den Dringlichkeitsgraden entsprechenden Dringlichkeitswerte bewirken also eine Umkehrung der Vertauschung der beiderlei Kennzeichen (Annahmekennzeichen/Abweisungskennzeichen) erst nach einer solchen Anzahl von Zählerschritten in der einen Richtung — abzüglich von eingeschobenen Zählerschritten in der anderen Richtung —, die für den Wertigkeitsunterschied bezüglich zweier jeweils aufeinanderfolgender Dringlichkeitsgrade festgelegt ist. Aus dem gegebenen Zahlenbeispiel für die Dringlichkeitswerte ergibt sich, daß das Ausmaß dergegenseitigen Bevorzugungen durch Festlegung von Dringlichkeitswerten in Zuordnung zu den Dringlichkeitsgraden beliebig bestimmbar ist.

**Patentansprüche**

1. Schaltungsanordnung für Fernmeldevermittlungsanlagen, insbesondere Fernsprechvermittlungsanlagen, mit zentralen und/oder teilzentralen informationsverarbeitenden Schaltwerken mit einer hinsichtlich der Informations-Verarbeitungskapazität begrenzten Leistungsfähigkeit, und mit Verkehrsmeßeinrichtungen zur Ermittlung der Informationsverarbeitungs-Verkehrsbelastung jeweils eines Schaltwerkes und zur Erkennung von Informationsverarbeitungs-Verkehrsüberlastungen und zur Abwehr solcher Überlastungen, und mit Zählern (Z), die einerseits durch Verarbeitungsanforderungen in Richtung auf einen Schwellenwert weitergeschaltet und andererseits mit einer Abnahme der Informationsverarbeitungs-Verkehrsbelastung wieder zurückgeschaltet werden und mit Einrichtungen (D), in denen mehrere solchen verschieden hohen Schwellenwerte, die verschiedenen und unterschiedlich hohen Zählerstandswerten entsprechen, unterschiedlichen Dringlichkeitsgraden verschiedener Arten von Verarbeitungsanforderungen zugeordnet sind, wodurch überdurchschnittlich dringliche Verarbeitungsanforderungen mit einem gewissen Vorrang gegenüber unterdurchschnittlich dringlichen Verarbeitungsanforderungen berücksichtigt werden und zur Abwicklung entsprechender Informationsverarbeitungs-Vorgänge führen, und mit von den Verkehrsmeßeinrichtungen dahingehend beeinflußten Anforderungsabweiseinrichtungen (A), daß diese eintreffende Verarbeitungsanforderungen unabhängig von ihrer jeweiligen Dringlichkeit quantitativ teils als anzunehmend durch ein Annahmekennzeichen und teils als abzuweisend durch ein Abweisungskennzeichen markieren, wozu einer Anforderungsabweiseinrichtung (A) einer der Zähler (Z) nachgeordnet ist, und mit einem diesem zugeordneten Vergleicher (V), der jedes von der Anforderungsabweiseinrichtung (A) abgegebene Kennzeichen zusammen mit einem dem jeweiligen Dringlichkeitsgrad der betreffenden Verarbeitungsanforderung entsprechenden Dringlichkeitswert erhält und mit dem momentanen Zählerstandswert vergleicht und dann, wenn bei Vorliegen eines Abweisungskennzeichens — bzw. Annahmekennzeichens — der Dringlichkeitsgrad größer — bzw. kleiner — ist als der momentane Zählerstandswert, das Abweisungskennzeichen gegen ein Annahmekennzeichen — bzw. umgekehrt — vertauscht, wobei der Vergleicher (V) den Zählerstandswert des Zählers (Z) um eins erhöht — bzw. erniedrigt —, wenn der Vergleicher (V) ein Abweisungskennzeichen gegen ein Annahmekennzeichen vertauscht — bzw. ein Annahmekennzeichen gegen ein Abweisungskennzeichen vertauscht.

2. Schaltungsanordnung nach Anspruch 1, dadurch gekennzeichnet, daß der Vergleicher (V) dann, wenn bei Vorliegen eines Abweisungskennzeichens der Dringlichkeitsgrad ebenso groß ist wie der momentane Zählerstandswert, er das Abweisungskennzeichen gegen ein Annahmekennzeichen vertauscht.

3. Schaltungsanordnung nach Anspruch 1, dadurch gekennzeichnet, daß der Vergleicher (V) dann, wenn bei Vorliegen eines Annahmekennzeichens der Dringlichkeitsgrad ebenso groß ist wie der momentane Zählerstandswert, er das Annahmekennzeichen gegen ein Abweisungskennzeichen vertauscht.

4. Schaltungsanordnung nach Anspruch 1, dadurch gekennzeichnet, daß den in einer stetigen Folge abgestuften Dringlichkeitsgraden entsprechende Dringlichkeitswerte eine Umkehrung der Vertauschung der beiderlei Kennzeichen erst nach einer solchen Anzahl von Zählerschritten in der einen Richtung — abzüglich von eingeschobenen Zählerschritten in der anderen Richtung — bewirken, die für den Wertigkeitsunterschied bezüglich zweier aufeinander folgender Dringlichkeitsgrade festgelegt ist.

5. Schaltungsanordnung nach Anspruch 1, dadurch gekennzeichnet, daß dem Zähler (Z, z0 bis z6) ein Höchststandspeicher (v1 bis v5) zugeordnet ist, der den im Zuge von Weiterschaltungsvorgängen und Zurückschaltungsvorgängen an dem Zähler (Z) von diesem jeweils erreichten größten Zählerstandswert speichert, und daß der Vergleicher (V) den jeweils erhaltenen Dringlichkeitswert mit dem im Höchststandspeicher (v1 bis v5) gespeicherten Zählerstandswert vergleicht, und daß dann, wenn der von dem Zähler (Z, z0 bis z6) unmittelbar erreichte Zählerstandswert einen dem untersten Dringlichkeitswert entsprechenden Wert unterschreitet, insbesondere den Wert Null erreicht, der Höchststandspeicher (v1 bis v5) von seinem durch den Zähler (Z) inzwischen erreichten maximalen Zählerstandswert aus auf eine dem Wert Null entsprechende Schaltstellung zurückgeschaltet wird.

6. Schaltungsanordnung nach Anspruch 5, dadurch gekennzeichnet, daß den in einer stetigen Folge abgestuften Dringlichkeitsgraden entsprechende Dringlichkeitswerte eine Umkehrung der Vertauschung der beiderlei Kennzeichen erst nach einer solchen Anzahl von Zählerschritten in der einen Richtung — abzüglich von eingeschobenen Zählerschritten in der anderen Richtung — bewirken, die für den Wertigkeitsunterschied bezüglich zweier aufeinander folgender Dringlichkeitsgrade festgelegt ist.

7. Schaltungsanordnung nach Anspruch 4 oder 5, dadurch gekennzeichnet, daß der Vergleicher (V) dann, wenn bei Vorliegen eines Abweisungskennzeichens der Dringlichkeitsgrad ebenso groß ist wie der momentane Zählerstandswert, er das Abweisungskennzeichen gegen ein Annahmekennzeichen vertauscht.

8. Schaltungsanordnung nach Anspruch 4 oder 5, dadurch gekennzeichnet, daß der Vergleicher (V) dann, wenn bei Vorliegen eines Annahmekennzeichens der Dringlichkeitsgrad ebenso groß ist wie der momentane Zählerstandswert, er das Annahmekennzeichen gegen ein Abweisungskennzeichen vertauscht.

9. Schaltungsanordnung nach Anspruch 4 oder 5, dadurch gekennzeichnet, daß in einem Dringlichkeitszuordner (D) in Zuordnung zu Dringlichkeitskennzeichen, die zusammen mit Verarbeitungsanforderungen übertragen werden, Dringlichkeitswerte gespeichert sind, und daß bei Eintreffen eines Verarbeitungsauftrages der Dringlichkeitszuordner (D) das Dringlichkeitskennzeichen erhält und dafür einen diesem zugeordneten Dringlichkeitswert an den Vergleicher (V) überträgt.

**Claims**

1. A circuit arrangement for telecommunications exchange systems, in particular telephone exchange systems, with central and/or sub-central, information-processing switching circuits which have a call-handling capacity which is limited in respect of the information processing capacity, and with traffic measuring devices which determine the information processing traffic loading of each switching circuit, which recognise information processing traffic overloads, and which avert such overloads, and with counters (Z) which on the one hand are stepped-on in the direction of a threshold value by processing requests and on the other hand are stepped back with a reduction in the information processing traffic loading and with devices (D) in which a plurality of such threshold values of differing magnitude, which correspond to various count values of differing magnitude, are assigned to different precedence levels of different types of processing requests, as a result of which processing requests of above-average precedence are taken into account with a specific priority in comparison to processing requests of below-average precedence and lead to the handling of corresponding information processing procedures, and with request rejecting devices (A) which are influenced by the traffic measuring devices in such manner that they mark incoming processing requests, independently of their respective precedence, quantitatively in part by an acceptance characteristic as to be accepted and in part by a rejection characteristic as to be rejected, for which purpose a request rejecting device (A) is connected at its output to one of the counters, and with an assigned comparator (V) which is supplied with each characteristic, emitted by the request rejecting device (A), together with a precedence value which corresponds to the respective precedence level of the respective processing request, which it compares with the instantaneous count value, and when, on the occurrence of a rejection characteristic — or acceptance characteristic — the precedence level is greater than — or lower than — the instantaneous count value, substitutes the rejection characteristic for an acceptance characteristic — or vice versa —, where the comparator (V) increases — or reduces — the count value of the counter (Z) by one when the comparator (V) substitutes a rejection characteristic for an acceptance characteristic — or an acceptance characteristic for a rejection characteristic.

2. A circuit arrangement as claimed in claim 1, characterised in that when, on the occurrence of a rejection characteristic, the precedence level is equal to the instantaneous count value, the comparator (V) substitutes the rejection characteristic for an acceptance characteristic.

3. A circuit arrangement as claimed in claim 1, characterised in that when, on the occurrence of an acceptance characteristic, the precedence level is equal to the instantaneous count value, the comparator (V) substitutes the acceptance characteristic for a rejection characteristic.

4. A circuit arrangement as claimed in claim 1, characterised in that precedence values which correspond to the precedence levels, graduated in a continuous sequence, reverse the substitution of the two types of characteristics only after a number of counting steps in the one direction — minus inserted counting steps in the other direction — which is specified for the value difference between two consecutive precedence levels.

5. A circuit arrangement as claimed in claim 1, characterised in that the count (Z, z0 to z6) is assigned a maximum count store (v1 to v5) which stores the maximum count value reached by the counter (Z) in the course of the stepping-on processes and stepping-back processes, and that the comparator (V) compares the precedence value, thus obtained, with the count value stored in the maximum count store (v1 to v5), and that whenever the count value directly reached by the counter (Z, z0 to z6) falls below a value corresponding to the lowest precedence value, and in particular reaches the value zero, the maximum count store (v1 to v5) is stepped back from its maximum count value, meanwhile reached by the counter (Z), to a position corresponding to the value of zero.

6. A circuit arrangement as claimed in claim 5, characterised in that precedence values which correspond to the precedence levels, graduated in a continuous sequence, reverse the substitution of the two types of characteristic only after a number of counting steps in the one direction — minus inserted counting steps in the other direction — which is specified for the value difference between two consecutive precedence levels.

7. A circuit arrangement as claimed in claim 4 or 5, characterised in that whenever, on the occurrence of a rejection characteristic, the precedence level is equal to the instantaneous count value, the comparator (V) substitutes the rejection characteristic for an acceptance characteristic.

8. A circuit arrangement as claimed in claim 4 or 5, characterised in that whenever, on the occurrence of an acceptance characteristic, the precedence level is equal to the instantaneous count value, the comparator (V) substitutes the acceptance characteristic for a rejection characteristic.

9. A circuit arrangement as claimed in claim 4 or 5, characterised in that precedence values are stored in a precedence allocator (D) in assignment to precedence characteristics which are transmitted together with processing requests, and that on the arrival of a processing order the precedence allocator (D) receives the precedence characteristic and thus transmits an assigned precedence value to the comparator (V).

**Revendications**

1. Montage pour des installations de télécommunications, notamment des installations téléphoniques, comportant des unités centrales et/ou partiellement centrales de traitement des informations et possédant des possibilités limitées concernant les capacités de traitement des informations, et des dispositifs de mesure du trafic servant à déterminer la charge en trafic de traitement d'informations d'une unité respective de commutation et à identifier des surcharges en trafic de traitement d'informations et à lutter contre de telles surcharges, et des compteurs (Z) dont l'état de comptage d'une part est avancé par des demandes de traitement en direction d'une valeur de seuil et d'autre part est à nouveau rétrogradé par une réduction de la charge en trafic de traitement d'informations, et des dispositifs (D), dans lesquels plusieurs valeurs de seuil, qui se situent à des niveaux différents et correspondent à différentes valeurs de l'état de comptage, situées à des niveaux différents, et sont associés à différents degrés d'urgence de différents types de demandes de traitement, ce qui a pour effet que des demandes de traitement d'une urgence supérieure à la moyenne sont prises en considération avec une certaine préséance par rapport à des demandes de traitement d'une urgence inférieure à la moyenne et aboutissent à l'exécution d'opérations correspondantes de traitement d'informations, et des dispositifs (A) de rejet de demandes, influencés par les dispositifs de mesure du trafic de telle manière que ces demandes de traitement arrivantes sont marquées quantitativement, indépendamment de leur urgence respective, en partie comme étant acceptables, par un signal caractéristique d'acceptation, et en partie comme étant rejetables, par un signal caractéristique de rejet, auquel cas, à cet effet, en aval d'un dispositif (A) de rejet de demandes se trouve branché l'un des compteurs (Z), et un comparateur (V), qui est associé à ce compteur et qui reçoit chaque signal caractéristique délivré par le dispositif (A) de rejet de demandes ainsi qu'une valeur d'urgence correspondant au degré d'urgence respectif de la demande de traitement considérée et compare ce signal caractéristique à la valeur instantanée de l'état de comptage et qui remplace le signal caractéristique de rejet par un signal caractéristique d'acceptation — ou inversement — lorsque, dans le cas de la présence d'un signal caractéristique de rejet — ou d'un signal caractéristique d'acceptation — le degré d'urgence est supérieur ou inférieur — à la valeur instantanée de l'état de comptage, auquel cas le comparateur (V) accroît — ou réduit — d'une unité la valeur de l'état de comptage du compteur (Z), lorsque ce comparateur (V) remplace un signal caractéristique de rejet par un signal caractéristique d'acceptation — ou remplace un signal caractéristique d'acceptation par un signal caractéristique de rejet.

2. Montage suivant la revendication 1, caractérisé par le fait que le comparateur (V) remplace le signal caractéristique de rejet par un signal caractéristique d'acceptation lorsque, dans le cas de la présence d'un signal caractéristique de rejet, le degré d'urgence est égal à la valeur instantanée de l'état de comptage.

3. Montage suivant la revendication 1, caractérisé par le fait que le comparateur remplace le signal caractéristique d'acceptation par un signal caractéristique de rejet lorsque, lors de la présence d'un signal caractéristique d'acceptation, le degré d'urgence est égal à la valeur instantanée de l'état de comptage.

4. Montage suivant la revendication 1, caractérisé par le fait que des valeurs d'urgence, qui correspondent à des degrés d'urgence échelonnés selon une suite continue, provoquent une inversion de la permutation des deux types de signaux caractéristiques uniquement au-delà d'un nombre de pas de comptage dans une direction — déduction faite des pas de comptage exécutés dans l'autre direction —, qui est fixé pour la différence de valeur en rapport avec deux degrés d'urgence successifs.

5. Montage suivant la revendication 1, caractérisé par le fait qu'au compteur (Z, z0 à z6) est associée une mémoire d'états maximum (v1 à v5), qui mémorise la valeur d'état de comptage maximale atteinte respectivement par le compteur (Z) au cours d'opérations de comptage progressif et d'opérations de comptage régressif, et que le comparateur (V) compare la valeur d'urgence respectivement obtenue à la valeur de l'état de comptage mémorisée dans la mémoire d'états maximum (v1 à v5), et que, lorsque la valeur de l'état de comptage, atteinte directement par le compteur (Z, z0 à z6) tombe au-dessous d'une valeur correspondant à la valeur d'urgence la plus faible, et notamment atteint la valeur zéro, la mémoire d'états maximum (v1 à v5) est rétrogradée à partir de sa valeur d'état de comptage maximum atteinte entre-temps par le compteur (Z), à une position de commutation correspondant à la valeur zéro.

6. Montage suivant la revendication 5, caractérisé par le fait que des valeurs d'urgence, qui correspondent aux degrés d'urgence échelonnés selon une suite continue, provoquent une inversion de la permutation des deux types de signaux caractéristiques uniquement après un nombre de pas de comptage dans une direction — déduction faite des pas de comptage exécutés dans l'autre direction —, qui est fixée pour la différence de valeur en rapport avec deux degrés d'urgence successifs.

7. Montage suivant la revendication 4 ou 5, caractérisé par le fait que le comparateur (V) remplace le signal caractéristique de rejet par un signal caractéristique d'acceptation lorsque, dans le cas de la présence d'un signal caractéristique de rejet, le degré d'urgence est égal à la valeur instantanée de l'état de comptage.

8. Montage suivant la revendication 4 ou 5, caractérisé par le fait que le comparateur (V) remplace le signal caractéristique d'acceptation par un signal caractéristique de rejet lorsque, dans le cas de la présence d'un signal caractéristique d'acceptation, le degré d'urgence est égal à la valeur instantanée de l'état de comptage.

9. Montage suivant la revendication 4 ou 5, caractérisé par le fait que des valeurs d'urgence sont mémorisées dans un dispositif (D) d'affectation d'urgences, en association avec des signaux caractéristiques d'urgence qui sont transmis en même temps que des demandes de traitement, et que lors de l'arrivée d'un ordre de traitement, le dispositif (D) d'affectation d'urgences reçoit le signal caractéristique d'urgence et transmet, à cet effet, une valeur d'urgence associée à ce signal, au comparateur (V).

# FIG 1

# FIG 2